# EUROPEAN PATENT SPECIFICATION

(11) **EP 1 868 093 B1**
(45) Date of publication and mention of the grant of the patent: **22.09.2010**
(21) Application number: 07003220.6
(22) Date of filing: 15.02.2007
(51) Int. Cl.: G06F 9/48, H04L 29/06, G06F 12/08

(54) **Method and system for a user space TCP offload engine (TOE)**
Verfahren und System für eine Benutzerraum-TCP-Offload-Engine (TOE)
Procédé et système pour moteur à vide TCP (TOE) d'un espace utilisateur

(30) Priority: 01.05.2006 US 796486 P; 18.07.2006 US 489407
(43) Date of publication of application: 19.12.2007
(73) Proprietor: Broadcom Corporation, Irvine, CA 92617 (US)
(72) Inventor: Aloni, Eliezer, Zur Yigal (IL); Zur, Uri El, 92603 Irvine CA (US); Shalom, Rafi, Givat Shmuel (IL); Bestler, Caitlin, 92653 Laguna Hills CA (US)
(74) Representative: Jehle, Volker Armin

(56) References cited:
- WO-A-2004/021628
- US-A1- 2005 021 680
- US-B1- 7 003 586

## Description

### FIELD OF THE INVENTION

Certain embodiments of the invention relate to processing of TCP data and related TCP information. More specifically, certain embodiments of the invention relate to a method and system for a user space TCP offload engine.

### BACKGROUND OF THE INVENTION

There are different approaches for reducing the processing power of TCP/IP stack processing. In a TCP Offload Engine (TOE), the offloading engine performs all or most of the TCP processing, presenting to the upper layer a stream of data. There may be various disadvantages to this approach. The TOE may be tightly coupled with the operating system and therefore may require solutions that are dependent on the operating system and may require changes in the operating system to support it. The TOE may require a side by side stack solution, requiring some kind of manual configuration, either by the application, for example, by explicitly specifying a socket address family for accelerated connections. The TOE may also require some kind of manual configuration by an IT administrator, for example, by explicitly specifying an lP subnet address for accelerated connections to select which of the TCP flows will be offloaded and the offload engine is very complex as it needs to implement TCP packet processing.

Large segment offload (LSO)/transmit segment offload (TSO) may be utilized to reduce the required host processing power by reducing the transmit packet processing. In this approach the host sends to the NIC, bigger transmit units than the maximum transmission unit (MTU) and the NIC cuts them to segments according to the MTU. Since part of the host processing is linear to the number of transmitted units, this reduces the required host processing power. While being efficient in reducing the transmit packet processing, LSO does not help with receive packet processing. In addition, for each single large transmit unit sent by the host, the host receives from the far end multiple ACKs, one for each MTU-sized segment. The multiple ACKs require consumption of scarce and expensive bandwidth, thereby reducing throughput and efficiency.

In large receive offload (LRO), a stateless receive offload mechanism, the TCP flows may be split to multiple hardware queues, according to a hash function that guarantees that a specific TCP flow would always be directed into the same hardware queue. For each hardware queue, the mechanism takes advantage of interrupt coalescing to scan the queue and aggregate subsequent packets on the queue belonging to the same TCP flow into a single large receive unit.

While this mechanism does not require any additional hardware from the NIC besides multiple hardware queues, it may have various performance limitations. For example, if the number of flows were larger than the number of hardware queues, multiple flows would fall into the same queue, resulting in no LRO aggregation for that queue. If the number of flows is larger than twice the number of hardware queues, no LRO aggregation is performed on any of the flows. The aggregation may be limited to the amount of packets available to the host in one interrupt period. If the interrupt period is short, and the number of flows is not small, the number of packets that are available to the host CPU for aggregation on each flow may be small, resulting in limited or no LRO aggregation. The limited or no LRO aggregation may be present even in instances where the number of hardware queues is large. The LRO aggregation may be performed on the host CPU, resulting in additional processing. The driver may deliver to the TCP stack a linked list of buffers comprising a header buffer followed by a series of data buffers, which may require more processing than in the case where all the data is contiguously delivered on one buffer.

When the host processor has to perform a read/write operation, a data buffer has to be allocated in the user space. A read operation may be utilized to copy data from the file into this allocated buffer. A write operation may be utilized to transmit the contents of the buffer to a network. The OS kernel has to copy all data from the user space into the kernel space. Copy operations are CPU and memory bandwidth intensive, limiting system performance.

For example US2005/021680 discloses an interpose socket library and an IOCTL manager in user space to format an application request as a custom I/O control call (IOCTL) that enables the user program and the kernel program to "pass message buffers back and forth".

The host processing power may be consumed by the copying of data between user space and kernel space in the TCP/IP stack. Some solutions have been proposed to reduce the host processing power. For example, utilizing remote direct memory access (RDMA) avoids memory copy in both transmit and receive directions. However, this requires a new application programming interface (API), a new wire protocol, and modifications to existing applications at both sides of the wire. A local DMA engine may be utilized to offload memory copy in both transmit and receive directions. Although a local DMA engine may offload copying operations from the CPU, it does not relieve the memory bandwidth required. The memory bandwidth may be a severe bottleneck in high speed networking applications as platforms shift towards multiple CPU architectures, with multiple cores in each CPU, all sharing the same memory.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for a user space TCP offload engine, substantially as shown in and/or described in connection with at least one of the figures, as set forth more completely in the claims.

### BRIEF DESCRIPTION OF SEVERAL VIEWS OF THE DRAWINGS

FIG. 1A is a block diagram of an exemplary system for TCP offload, in accordance with an embodiment of the invention.

FIG. 1B is a block diagram of another exemplary system for TCP offload, in accordance with an embodiment of the invention.

FIG. 1C is an alternative embodiment of an exemplary system for TCP offload, in accordance with an embodiment of the invention.

FIG. 1D is a flow diagram illustrating copying of data for a write operation in a host CPU system, in accordance with an embodiment of the invention.

FIG. 1E is a flow diagram illustrating copying of data for a read operation in a host CPU system, in accordance with an embodiment of the invention.

FIG. 2A is a flow diagram that illustrates exemplary connection establishment for user space TCP offload engine (TOE), in accordance with an embodiment of the invention.

FIG. 2B is a block diagram of an exemplary system illustrating allocation of queues by a user space library, in accordance with an embodiment of the invention.

FIG. 3A is a flow diagram that illustrates exemplary sending or transmission for user space TOE, in accordance with an embodiment of the invention.

FIG. 3B is a flow diagram that illustrates exemplary sending or transmission for user space TOE when the application buffer is not in cache, in accordance with an embodiment of the invention.

FIG. 3C is a flow diagram that illustrates exemplary sending or transmission for user space TOE when the application buffer is in cache, in accordance with an embodiment of the invention.

FIG. 4A is a flow diagram that illustrates exemplary receiving for user space TOE, in accordance with an embodiment of the invention.

FIG. 4B is a flow diagram that illustrates exemplary receiving for user space TOE when the application buffer is not in cache, in accordance with an embodiment of the invention.

FIG. 4C is a flow diagram that illustrates exemplary receiving for user space TOE when the application buffer is in cache, in accordance with an embodiment of the invention.

FIG. 5 is a flowchart illustrating exemplary steps for work request completion for transparent TCP offload with a user space library, in accordance with an embodiment of the invention.

### DETAILED DESCRIPTION OF THE INVENTION

Certain embodiments of the invention may be found in a method and system for user space TCP offload engine. Aspects of the method and system may comprise offloading transmission control protocol (TCP) processing of received data to an on-chip processor. The received data may be posted directly to hardware, bypassing kernel processing of the received data, utilizing a user space library. If the received data is not cached in memory, an application buffer comprising the received data may be registered by the user space library. The application buffer may be pinned and posted to the hardware.

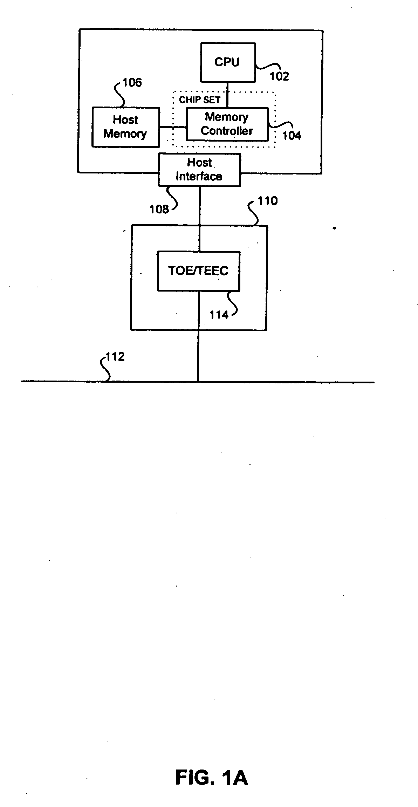

FIG. 1A is a block diagram of an exemplary system for TCP offload, in accordance with an embodiment of the invention. Accordingly, the system of FIG. 1A may be adapted to handle TCP offload of transmission control protocol (TCP) datagrams or packets. Referring to FIG. 1A, the system may comprise, for example, a CPU 102, a memory controller 104, a host memory 106, a host interface 108, network subsystem 110 and an Ethernet 112. The network subsystem 110 may comprise, for example, a TCP-enabled Ethernet Controller (TEEC) or a TCP offload engine (TOE) 114. The network subsystem 110 may comprise, for example, a network interface card (NIC). The host interface 108 may be, for example, a peripheral component interconnect (PCI), PCI-X, PCI-Express, ISA, SCSI or other type of bus. The memory controller 106 may be coupled to the CPU 104, to the memory 106 and to the host interface 108. The host interface 108 may be coupled to the network subsystem 110 via the TEEC/TOE 114.

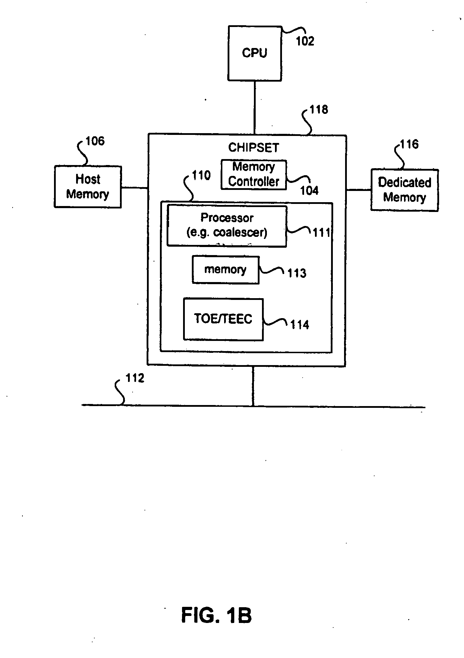

FIG. 1B is a block diagram of another exemplary system for TCP offload, in accordance with an embodiment of the invention. Referring to FIG. 1B, the system may comprise, for example, a CPU 102, a host memory 106, a dedicated memory 116 and a chip set 118. The chip set 118 may comprise, for example, the network subsystem 110 and the memory controller 104. The chip set 118 may be coupled to the CPU 102, to the host memory 106, to the dedicated memory 116 and to the Ethernet 112. The network subsystem 110 of the chip set 118 may be coupled to the Ethernet 112. The network subsystem 110 may comprise, for example, the TEEC/TOE 114 that may be coupled to the Ethernet 112. The network subsystem 110 may communicate to the Ethernet 112 via a wired and/or a wireless connection, for example. The wireless connection may be a wireless local area network (WLAN) connection as supported by the IEEE 802.11 standards, for example. The network subsystem 110 may also comprise, for example, an on-chip memory 113. The dedicated memory 116 may provide buffers for context and/or data.

The network subsystem 110 may comprise a processor such as a coalescer 111. The coalescer 111 may comprise suitable logic, circuitry and/or code that may be enabled to handle the accumulation or coalescing of TCP data. In this regard, the coalescer 111 may utilize a flow lookup table (FLT) to maintain information regarding current network flows for which TCP segments are being collected for aggregation. The FLT may be stored in, for example, the network subsystem 110. The FLT may comprise at least one of the following: a source IP address, a destination IP address, a source TCP address, a destination TCP address, for example. In an alternative embodiment of the invention, at least two different tables may be utilized, for example, a table comprising a 4-tuple lookup to classify incoming packets according to their flow. The 4-tuple lookup table may comprise at least one of the following: a source IP address, a destination IP address, a source TCP address, a destination TCP address, for example. A flow context table may comprise state variables utilized for aggregation such as TCP sequence numbers.

The FLT may also comprise at least one of a host buffer or, memory address including a scafter-gather-list (SGL) for non-continuous memory, a cumulative acknowledgments (ACKs), a copy of a TCP header and options, a copy of an lP header and options, a copy of an Ethernet header, and/or accumulated TCP flags, for example. The coalescer 111 may be enabled to generate a single aggregated TCP segment from the accumulated or collected TCP segments when a termination event occurs. The single aggregated TCP segment may be communicated to the host memory 106, for example.

Although illustrated, for example, as a CPU and an Ethernet, the present invention need not be so limited to such examples and may employ, for example, any type of processor and any type of data link layer or physical media, respectively. Accordingly, although illustrated as coupled to the Ethernet 112, the TEEC or the TOE 114 of FIG. 1A may be adapted for any type of data link layer or physical media. Furthermore, the present invention also contemplates different degrees of integration and separation between the components illustrated in FIGS. 1A-B. For example, the TEEC/TOE 114 may be a separate integrated chip from the chip set 118 embedded on a motherboard or may be embedded in a NIC. Similarly, the coalescer 111 may be a separate integrated chip from the chip set 118 embedded on a motherboard or may be embedded in a NIC. ln addition, the dedicated memory 116 may be integrated with the chip set 118 or may be integrated with the network subsystem 110 of FIG. 1B.

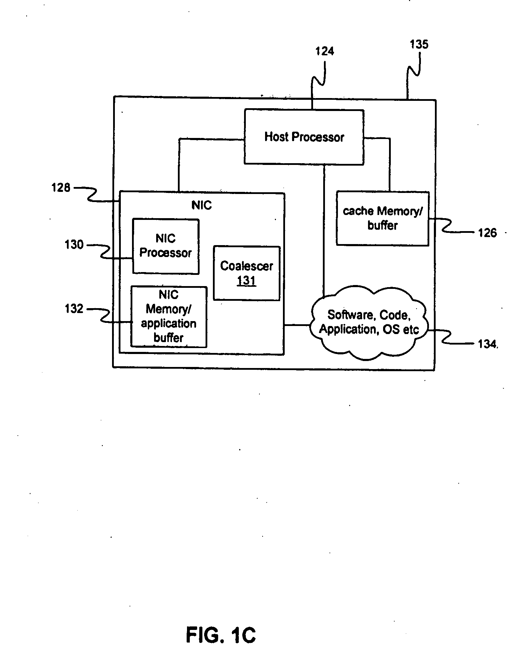

FIG. 1C is an alternative embodiment of an exemplary system for TCP offload, in accordance with an embodiment of the invention. Referring to FIG. 1C, there is shown a hardware block 135. The hardware block 135 may comprise a host processor 124, a cache memory/buffer 126, a software algorithm block 134 and a NIC block 128. The NIC block 128 may comprise a NIC processor 130, a processor such as a coalescer 131, and a NIC memory/ application buffer block 132. The NIC block 128 may communicate with an external network via a wired and/or a wireless connection, for example. The wireless connection may be a wireless local area network (WLAN) connection as supported by the IEEE 802.11 standards, for example.

The coalescer 131 may be a dedicated processor or hardware state machine that may reside in the packet-receiving path. The host TCP stack may comprise software that enables management of the TCP protocol processing and may be part of an operating system, such as Microsoft Windows or Linux. The coalescer 131 may comprise suitable logic, circuitry and/or code that may enable accumulation or coalescing of TCP data. In this regard, the coalescer 131 may utilize a flow lookup table (FLT) to maintain information regarding current network flows for which TCP segments are being collected for aggregation. The FLT may be stored in, for example, the NIC memory/ application buffer block 132. The coalescer 131 may enable generation of a single aggregated TCP segment from the accumulated or collected TCP segments when a termination event occurs. The single aggregated TCP segment may be communicated to the cache memory/buffer 126, for example.

In accordance with certain embodiments of the invention, providing a single aggregated TCP segment to the host for TCP processing significantly reduces overhead processing by the host 124. Furthermore, since there is no transfer of TCP state information, dedicated hardware such as a NIC 128 may assist with the processing of received TCP segments by coalescing or aggregating multiple received TCP segments so as to reduce per-packet processing overhead.

In conventional TCP processing systems, it is necessary to know certain information about a TCP connection prior to arrival of a first segment for that TCP connection. In accordance with various embodiments of the invention, it is not necessary to know about the TCP connection prior to arrival of the first TCP segment since the TCP state or context information is still solely managed by the host TCP stack and there is no transfer of state information between the hardware stack and the software stack at any given time.

In an embodiment of the invention, an offload mechanism may be provided that is stateless from the host stack perspective, while state-full from the offload device perspective, achieving comparable performance gain when compared to TOE. TCP offload may reduce the host processing power required for TCP by allowing the host system to process both receive and transmit data units that are bigger than a MTU. In an exemplary embodiment of the invention, 64 KB of processing data units (PDUs) may be processed rather than 1.5 KB PDUs in order to produce a significant reduction in the packet rate, thus reducing the host processing power for packet processing.

During TCP offload, no handshake may be utilized between the host operating system and the NIC containing the TOE. The TOE may operate autonomously in identifying new flows and for offloading. The offload on the transmit side may be similar to LSO, where the host sends big transmission units and the TOE may divide them to smaller transmitted packets according to maximum segment size (MSS).

TCP offload on the receive side may be performed by aggregating a plurality of received packets of the same flow and delivering them to the host as if they were received in one packet - one bigger packet in the case of received data packets, and one aggregate ACK packet in the case of received ACK packets. The processing in the host may be similar to the processing of a big packet that was received. In the case of TCP flow aggregation, rules may be defined to determine whether to aggregate packets. The aggregation rules may be established to allow as much aggregation as possible, without increasing the round trip time such that the decision on whether to aggregate depends on the data that is received and the importance of delivering it to the host without delay. The aggregation may be implemented with transmit-receive coupling, wherein the transmitter and receiver are coupled, by utilizing transmission information for offload decisions, and the flow may be treated as a bidirectional flow. The context information of the receive offload in TOE may be maintained per flow. ln this regard, for every received packet, the incoming packet header may be utilized to detect the flow it belongs to and this packet updates the context of the flow.

When the transmitter and receiver are coupled, the transmitted network packets may be searched along with the received network packets to determine the particular network flow to which the packet belongs. The transmitted network packet may enable updating of the context of the flow, which may be utilized for receive offload.

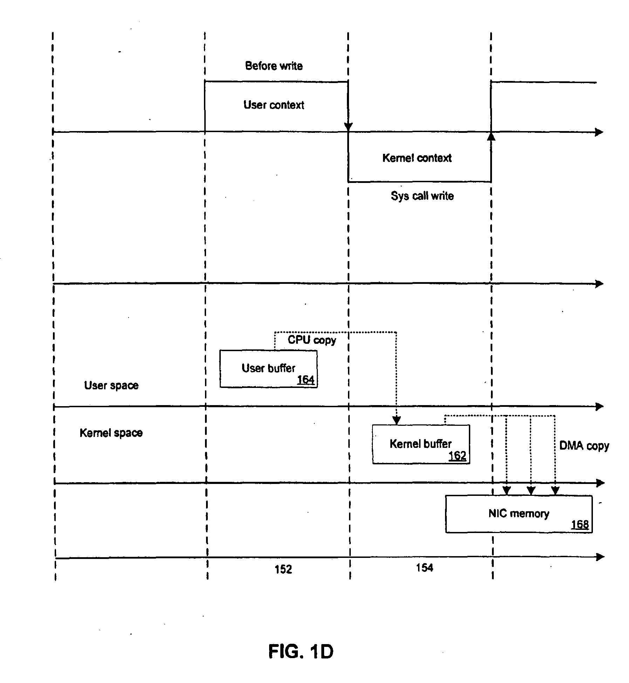

FIG. 1D is a flow diagram illustrating copying of data for a write operation in a host CPU system, in accordance with an embodiment of the invention. Referring to FIG. 1D, there is shown various context switches, a user buffer 164, a kernel buffer 162, a NIC memory 168, and copy operations to be performed for a write operation. In step 152, the write system call may cause a context switch from user mode to kernel mode. A copy may be performed to transfer the data into a kernel buffer 162. In step 154, the write system call may return, creating another context switch. Another copy may occur as the DMA engine may pass the data from the kernel buffer 162 to the NIC memory 168 independently and asynchronously. The data duplication may not be necessary and may be eliminated to decrease overhead and increase performance. To eliminate overhead, some of the copying between the kernel buffer 162 and user buffers 164 may be eliminated.

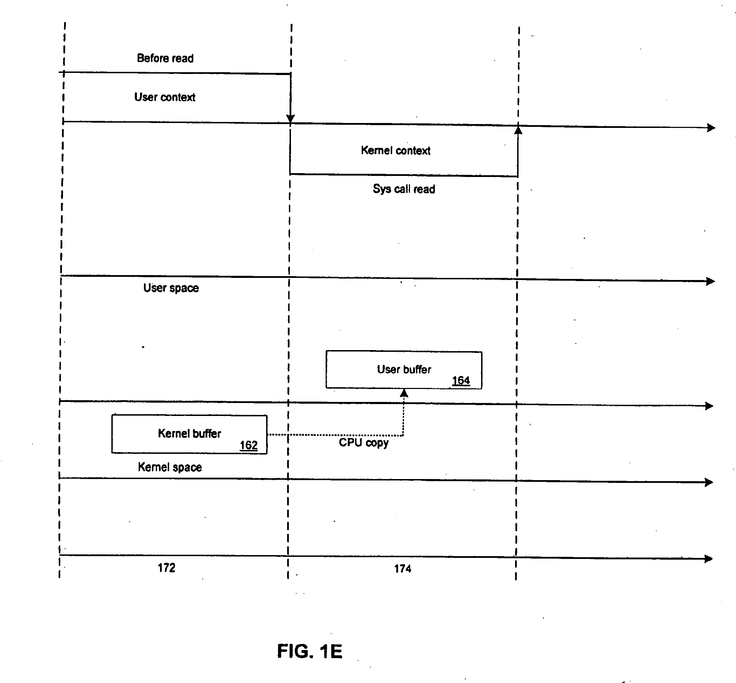

FIG. 1E is a flow diagram illustrating copying of data for a read operation in a host CPU system, in accordance with an embodiment of the invention. Referring to FIG. 1E, there is shown various context switches, a user buffer 164, a kernel buffer 162, a NIC memory 168, and copy operations to be performed for a write operation. In step 172, the read system call may cause a context switch from user mode to kernel mode. A copy may be performed to transfer the data into a kernel buffer 162. In step 174, the read system call may return, creating another context switch. Another copy may occur as the DMA engine may pass the data from the kernel buffer 162 to the NIC memory 168 independently and asynchronously. The data duplication may not be necessary and may be eliminated to decrease overhead and increase performance. To eliminate overhead, some of the copying between the kernel buffer 162 and user buffers 164 may be eliminated.

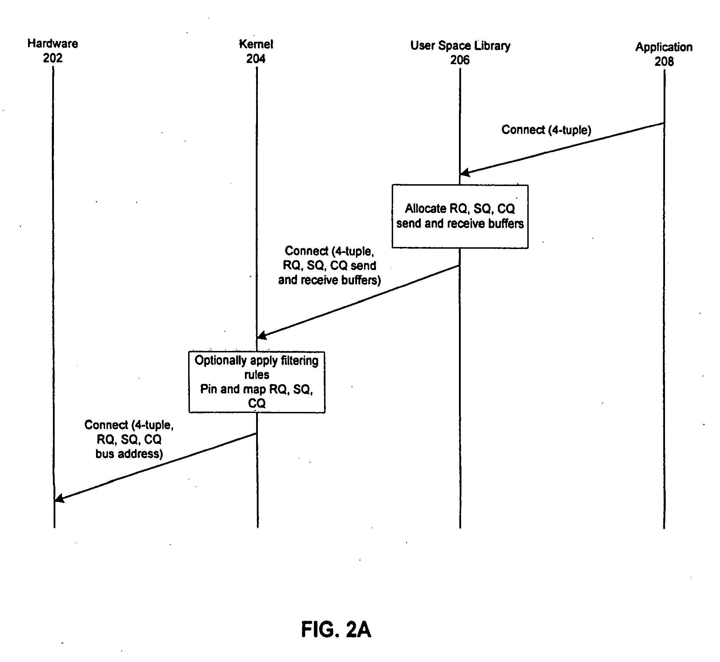

FIG. 2A is a flow diagram that illustrates exemplary connection establishment for user space TOE, in accordance with an embodiment of the invention. Referring to FIG. 2A, there is shown hardware 202, a kernel 204, a user space library 206 and an application 208. The hardware 202 may comprise suitable logic and/or circuitry that may be enabled to process received data from various drivers, and other devices coupled to the hardware 202. The kernel 204 may comprise suitable logic and/or code that may be enabled to manage the CPU's 102 resources and enable other applications 208 to run on the host system. The kernel 204 may enable scheduling, buffering, caching, spooling, and error handling functions, for example. The kernel 204 may also enable communication between various hardware and software components. The user space library 206 may be a collection of subprograms utilized to develop software. The user space library 206 may allow code and data to be shared and changed in a modular fashion.

The user space library 206 may register a connection by identifying the 4-tuple, a receive queue (RQ), a send queue (SQ), and a completion queue (CQ). The kernel 204 may optionally apply filtering rules to the registered connection packet to determine whether to allow the connection request. The kernel 204 may pin and map the RQ, SQ, CQ, and user context buffers. The kernel 204 may also store the DMA addresses of the RQ, SQ, CQ, and user context buffers in a newly allocated FLT for the flow.

In another embodiment of the invention, the user space library 206 may specify a handle of an existing connection provided by the kernel 204. The kernel 204 may agree to transfer ownership of the connection to the user space library 206. If the kernel 204 agrees to transfer ownership of the connection to the user space library 206, the kernel 204 may provide the required TCP state information for that connection to the user space library 206.

In another embodiment of the invention, the user space library 206 may handle passive connection establishment on its own. The user space library 206 may request the local IP Address and TCP port to be assigned to it, specifying the particular RQ and CQ to be used. If approved, the kernel 204 may register and pin the RQ and CQ, if not already pinned, and then create the offload listen entry.

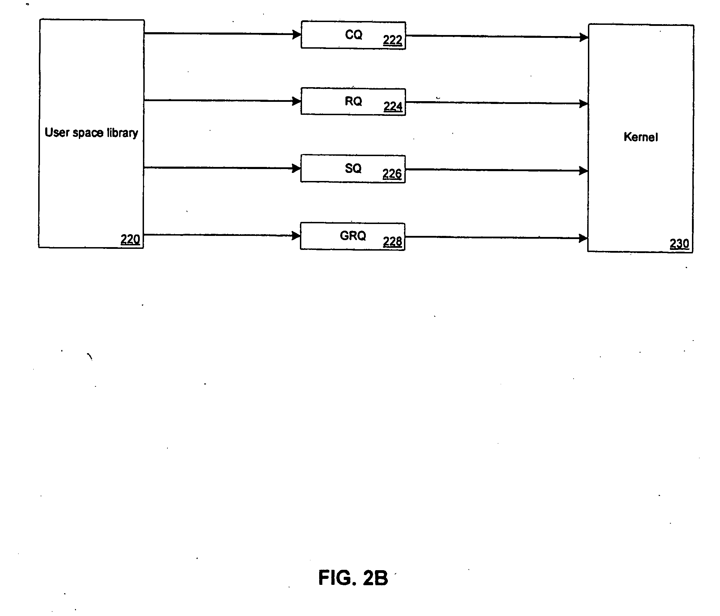

FIG. 2B is a block diagram of an exemplary system illustrating allocation of queues by a user space library, in accordance with an embodiment of the invention. Referring to FIG. 2B, there is shown a user space library 220, a completion queue (CQ) 222, a receive queue (RQ) 224, a send queue (SQ) 226, a general receive queue (GRQ) 228, and a kernel 230.

The user space library 220 may allocate at least one receive queue (RQ) 224, a send queue (SQ) 226, a general receive queue (GRQ) 228, a completion queue (CQ) 222 before enabling the flow for user space TOE handling. The kernel 230 may pin and map the RQ 224, SQ 226, CQ 222, and GRQ 228. The user space library 220 may allocate the RQ 224, SQ 226, CQ 222 and GRQ 228 data structures independently of any specific flow. The kernel 230 may supply a handle that may be referenced in later requests from the user space library 220.

A send queue (SQ) 226 may allow the user space library 220 to directly post transmit work requests to a buffer ring that may be read directly by the device. An optional doorbell may provide a memory-mapped location that the user space library 220 may write to in order to provide an event notification to the device. This doorbell ring may inform the device that a specific send queue 226 is not empty. The send queue 226 with a doorbell may be utilized for interfacing with RDMA devices. As with a RDMA interface, the buffers referenced in the work requests may use a handle representing an already registered buffer so that the device knows that the work request poster has the necessary permissions to use this buffer. This handle may be referred to as a steering tag (Stag) for RDMA over IP interfaces. The implementation of TOE with a user space library 220 may differ in the nature of the work requests posted to the send queue 226.

A receive queue (RQ) 224 may allow the user space library 220 to directly post receive work requests to a buffer pool that may be read directly by the device. As with transmit work requests, the buffer references may use a handle representing a registered buffer. A receive queue 224 supporting user space TOE may differ from a conventional RQ as the buffers may not be pre-associated with a specific incoming message at the time they are posted. This is because the underlying wire protocol, TCP, may not have a mandated correlation between work requests and wire protocol messages.

A completion queue (CQ) 222 may allow the user space library 220 to directly receive work completions written by the device. A completion queue 222 supporting user space TOE may differ from a conventional CQ as TOE may generate work completions in a more flexible order than would apply for a CQ 222 supporting RDMA. The completion queue 222 may have an associated mechanism where the user process may enable notification callbacks when a work completion is generated, or when a specific type of work completion is generated. For user space TOE, a proxy mechanism may be selected so that the device may still notify the user space library. A proxy in the kernel may be required because the device may not directly interrupt a user mode process. For example, a method for implementing this notification relay proxy may be relaying the callback, unblocking a semaphore or thread, or generating an event associated with a file descriptor.

An offload listen table (OLT) may be utilized to divert TCP Segments that do not match a specific flow, but match a local TCP port. An OLT may be integrated with support for offloaded connections, such as TOE, iSCSI and RDMA.

The user space TCP library 220 may be enabled to offer a socket API and/or socket operation interface. Each operation may correspond to a receive message (recvmsg()) or send message (sendmsg()) call depending on whether the API offered is a literal sockets API, a callback API and/or a work queue based asynchronous operation. For example, if a user posts three successive recvmsg() operations, then there may be three completions assuming there are no errors and the amount of payload delivered with each completion may match recvmsg() semantics. Accordingly, the number of TCP header actions required may not necessarily depend on the number of work request completions the user receives.

There may be two different data structures for receive buffers, for example, the RQ 224 and the GRQ 228. The RQ 224 may be enabled for direct reception if the user space library 220 determines that the overhead of enabling CNIC 128 access to it is justified. The just-in-time pinning may be utilized for justifying registration, else the user space library 220 may be utilized for justification of modestly sized buffers that are reused frequently and very large buffers.

The GRQ 228 may receive data when an RQ 224 entry is not available and/or for out-of-order packets. The out-of-order packets may be placed in RQ 224 buffers, but they may then have to be moved, if a PSH operation requires delivery of data before the buffer is full. Whenever a GRQ 228 buffer is completed, at least one RQ 224 buffer may also be completed whether or not anything was placed in it. The CQ 222 poll routine (cq_poll), in user space, may copy whatever data was placed in GRQ 228 buffers to the RQ 224 buffer. The RQ 224 buffer may be a suitable destination for a memory copy operation (memcpy()) even if no registration was ever performed on it, because cq_poll is a user space routine. The cost of the memcpy() operation may be negligible since the data may be in-cache for the application to use and is performed immediately before the application processes the data.

In contrast with a kernel handler performing a copy to user, the copy to user operation may be more complex than memcpy() and the chances that the cache may be invalidated before the application can use the data is higher. When a recvmsg() call is performed, the user space library 220 may be enabled to receive work completions that reported placement into GRQ 228 buffers, and then determine if the user space library 220 needs to wait for subsequent work requests. If waiting for subsequent work requests is warranted, the user space library 220 may decide to post a work request with the registered buffer ID for the target buffer to the RQ 224. Alternatively, the user space library 220 may wait for new GRQ 228 completions. When there are more completions, the user space library 220 may repeat the process, until it has enough received data to complete the socket level operation. Alternately, the user space library 220 may operate on a callback API, where it may invoke the next higher layer with an SGL composed of GRQ 228 buffers and an imperative indicating ownership and/or urgency in processing. The user space library 220 may process a plurality of headers and determine that the recvmsg() operation is not complete and continue working on the same RQ 224 work request.

In accordance with an embodiment of the invention, an RDMA-style interface based upon a mapped memory interface may be utilized and the elements of this interface may be referred to as a queue pair (QP) and completion queue (CQ) 222. TOE with a user space library may differ from TOE using kernel code based on a plurality of data structures used to interface the user space library 220 directly with the offload device.

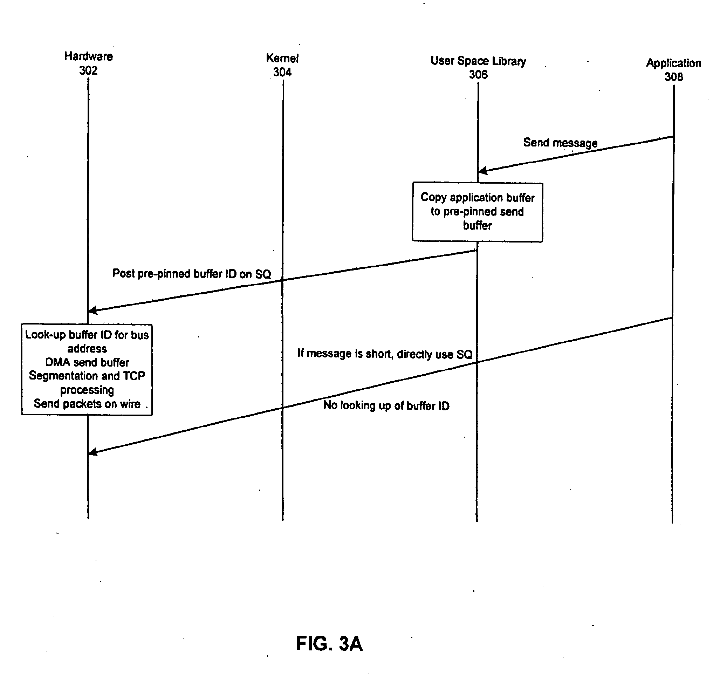

FIG. 3A is a flow diagram that illustrates exemplary sending or transmission for user space TOE, in accordance with an embodiment of the invention. Referring to FIG. 3A, there is shown hardware 302, a kernel 304, a user space library 306 and an application 308.

The hardware 302 may comprise suitable logic and/or circuitry that may be enabled to process received data from various drivers, and other devices coupled to the hardware 302. The kernel 304 may comprise suitable logic and/or code that may be enabled to manage the CPU's 102 system and/or device resources and enable other applications 308 to run on the host system. The kernel 304 may enable scheduling, buffering, caching, spooling, and error handling functions, for example. The kernel 304 may also enable communication between various hardware and software components. The user space library 306 may comprise a collection of subprograms, which may be utilized to develop software. The user space library 306 may allow code and/or data to be shared and changed in a modular fashion.

The application 308 may be enabled to transmit a send message to the user space library 306. If the send message is short or has a certain size, the user space library 306 may avoid pinning the application send buffer 132. In instances where the send message is short, it may be transmitted directly to the hardware using a SQ without looking up the buffer lD. lf the send message is not short or is greater than a certain size, the user space library 306 may be enabled to copy the application send buffer 132 to a pre-pinned application send buffer 132. The user space library 306 may post the pre-pinned application send buffer ID on the send queue (SQ). The hardware 302 may be enabled to look-up the buffer ID for the buffer address. The hardware 302 may be enabled to direct memory access (DMA) the application send buffer 132. The hardware 302 may perform segmentation and TCP processing of the data in the application send buffer 132 and transmit the resulting data packets on the wire.

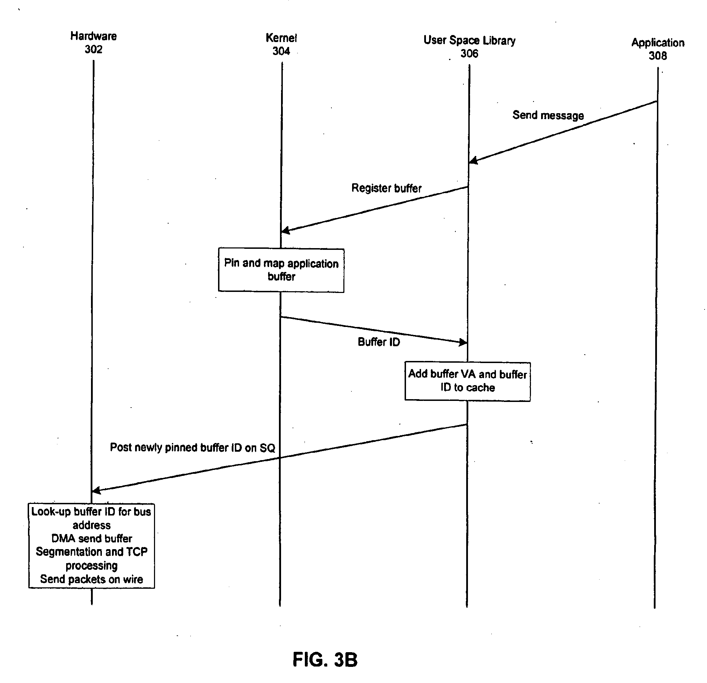

FIG. 3B is a flow diagram that illustrates exemplary sending or transmission for user space TOE when the application buffer is not in cache, in accordance with an embodiment of the invention. Referring to FIG. 3B, there is shown hardware 302, a kernel 304, a user space library 306 and an application 308.

In instances, when the application send buffer 132 is not in cache, the application 308 may be enabled to transmit a send message to the user space library 306. The user space library 306 may register the application send buffer 132 and transmit the application send buffer 132 to the kernel 304. The kernel 304 may be enabled to pin and map the application send buffer 132. The kernel 304 may transmit the buffer lD of the application send buffer 132 to the user space library 306. The user space library 306 may add a buffer virtual address to the received buffer ID and store the buffer ID in cache. The user space library 306 may post the buffer ID of the pinned and mapped application send buffer 132 in SQ to the hardware 302. The hardware 302 may be enabled to look-up the buffer ID for the buffer address. The hardware 302 may be enabled to direct memory access (DMA) transfer data for the application send buffer 132. The hardware 302 may perform segmentation and TCP processing of the data in the application send buffer 132 and transmit the resulting data packets on the wire.

In another embodiment of the invention, the user space library 306 may be enabled to post work requests to the send queue (SQ) directly without assistance from the kernel 304. For example, a method for the user space library 306 to inform the device that the send queue is no longer empty is the use of a doorbell. The doorbell is an address on the bus, which may result in an event notification to the device when the user writes to it. Doorbells may be allocated for several flows so that the address page may be write-enabled for a single user process. When direct posting to the send queue is enabled, the device may validate that the packets specified are legitimate for the send queue. lf the source and destination headers were reversed, the resulting packet may be assigned to the same FLT.

The work requests posted to the send queue directly from the user space library 306 may require user registered buffer IDs. These registered buffer IDs may represent the actual buffer, which the user space library 306 has registered, or an intermediate pre-registered buffer, which the user space library 306 copied the outbound data to. The user space library 306 may be enabled to determine the particular technique to be used at its discretion.

If a target application receive buffer is not in the registered cache, the user space library 306 may enable registration of the target application receive buffer. For example, a user space library 306 may utilize a memory registration request to register a receive buffer. The user space library 306 may cache registration of receive buffers so that when an application 308 submits the same buffer on subsequent requests the user space library 306 may not have to repeat the registration process.

In accordance with an embodiment of the invention, the TCP offload engine (TOE) 114 may enable offloading transmission control protocol (TCP) processing of received data to an on-chip processor, for example, a NIC processor 130. The received data may be posted directly to hardware 302 or the host processor 124, thereby bypassing kernel 304. processing of the received data utilizing the user space library 306. The hardware 302 may be enabled to determine if the received data is cached in memory 126. If the received data is not cached in the memory 126, the user space library 306 may enable registration of at least one application send buffer 132 comprising the received data. The kernel 304 may enable pinning of the application send buffer 132 comprising the received data. The user space library 306 may enable posting of the pinned application send buffer 132 comprising the received data to the hardware 302 or host processor 124. The user space library 306 may enable adding of an application send buffer 132 virtual address to a buffer ID of the application send buffer 132 and storage of the application send buffer 132 in cache memory 126. The user space library 306 may enable pre-posting of at least one application send buffer 132 comprising the received data to the hardware 302 or host processor 124.

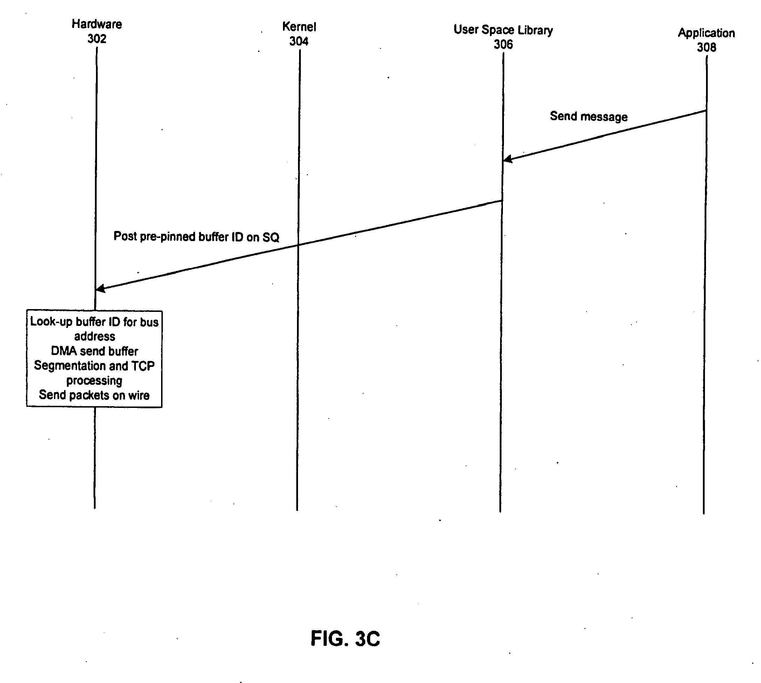

FIG. 3C is a flow diagram that illustrates exemplary sending or transmission for user space TOE when the application buffer is in cache, in accordance with an embodiment of the invention. Referring to FIG. 3C, there is shown hardware 302, a kernel 304, a user space library 306 and an application 308.

When the application buffer is in cache, the application 308 may be enabled to transmit a send message to the user space library 306. The user space library 306 may be enabled to post the pre-pinned application send buffer ID of the application send buffer 132 on SQ to the hardware 302 without kernel 304 involvement for short send messages. The hardware 302 may be enabled to look-up the buffer ID for the buffer address. The hardware 302 may be enabled to direct memory access (DMA) the data in the application send buffer 132. The hardware 302 may perform segmentation and TCP processing of the data in the application send buffer 132 and transmit the resulting data packets on the wire. In instances where the received data is cached in the memory 126, then the received data may be posted directly to the hardware 302 or host processor 124, thereby bypassing kernel 304 processing of the received data.

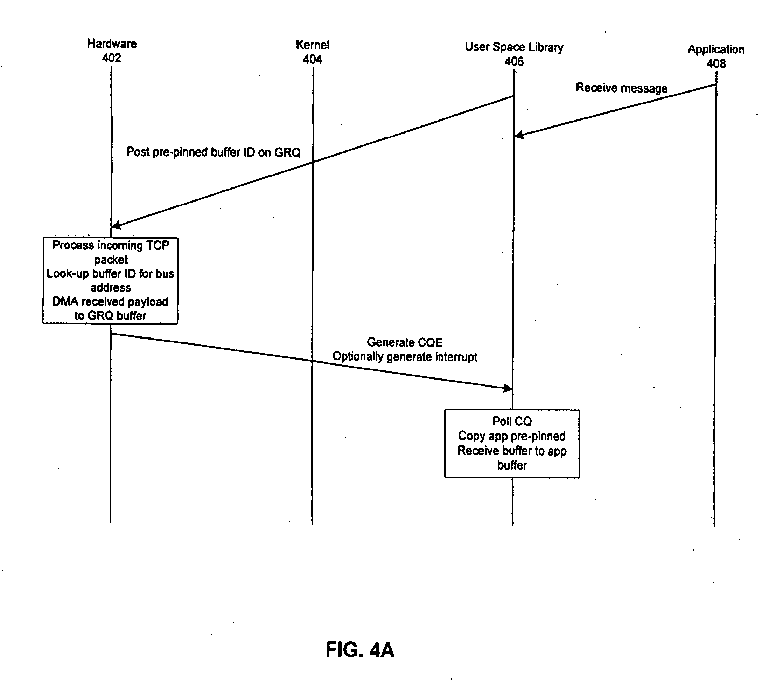

FIG. 4A is a flow diagram that illustrates exemplary receiving for user space TOE, in accordance with an embodiment of the invention. Referring to FIG. 4A, there is shown hardware 402, a kernel 404, a user space library 406 and an application 408.

The hardware 402 may comprise suitable logic and/or circuitry that may be enabled to process received data from various drivers, and other devices coupled to the hardware 402. The kernel 404 may comprise suitable logic and/or code that may be enabled to manage the CPU's 102 system and/or device resources and enable other applications 308 to run on the host system. The kernel 404 may enable scheduling, buffering, caching, spooling, and error handling functions, for example. The kernel 404 may also enable communication between various hardware and software components. The user space library 406 may comprise a collection of subprograms, which may be utilized to develop software. The user space library 406 may allow code and/or data to be shared and changed in a modular fashion.

The hardware 402 may be enabled to place header and payload to the receive buffers obtained from the RQ or GRQ. The hardware 402 may translate the buffer lD and offset to the required DMA addresses by validating remote write access to the target memory to prevent buffer overruns.

The user space library 406 may be enabled to post a pre-pinned buffer ID of the application receive buffer 132 on a generic receive queue (GRQ) to the hardware 402. The hardware 402 may be enabled to process the generated TCP segment and look-up the buffer ID for the buffer address and place the generated TCP segment on pre-posted library buffers. The hardware 402 may be enabled to direct memory access (DMA) the received payload to a GRQ buffer 228. The hardware 402 may be enabled to generate a completion queue entry (CQE) in the completion queue (CQ) 222 in order to indicate reception of the generated TCP packet. The user space library 406 may be enabled to poll the completion queue (CQ) 222. When the user space library 406 completes polling the CQ 222, the user space library 406 may request the hardware 402 that subsequent completion may be followed by an event notification. The user space library 406 may be enabled to copy the pre-pinned application receive buffer to an application receive buffer 132.

Registered buffers may be posted in receive work requests to the receive queue (RQ) and/or general receive queue (GRQ). The hardware 402 may enable indication of receipt of a TCP segment into a buffer allocated from the RQ or GRQ by posting a work completion or completion queue entry (CQE) to the completion queue (CQ). The hardware 402 may be enabled to generate a notification event when posting to a CQ.

The application 408 may be enabled to transmit a received message to the user space library 406. The user space library 406 may be enabled to post a pre-pinned buffer ID of the application receive buffer 132 on a generic receive queue (GRQ) to the hardware 402. The hardware 402 may be enabled to process the incoming TCP packet and look-up the buffer ID for the buffer address and place data for the incoming packets on pre-posted library buffers. The hardware 402 may be enabled to direct memory access (DMA) the received payload to a GRQ buffer. The hardware 402 may be enabled to generate a completion queue entry (CQE) in the completion queue (CQ) 137 in order to indicate reception of the TCP packet. The user space library 406 may be enabled to poll the completion queue (CQ) 137. When the user space library 406 completes polling the CQ 137, the user space library 406 may request the hardware 402 that subsequent completion may be followed by an event notification. The user space library 406 may be enabled to copy the pre-pinned application receive buffer to an application receive buffer 132.

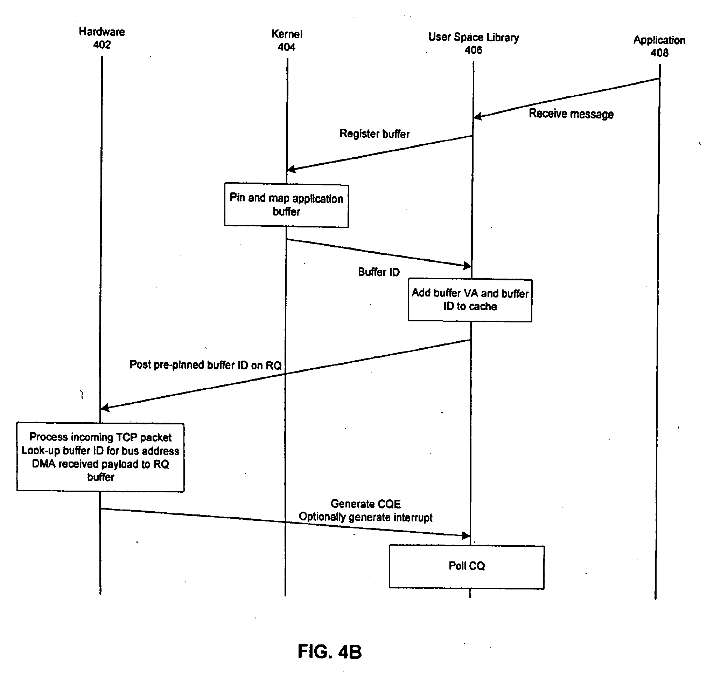

FIG. 4B is a flow diagram that illustrates exemplary receiving for user space TOE when the application buffer is not in cache, in accordance with an embodiment of the invention. Referring to FIG. 4B, there is shown hardware 402, a kernel 404, a user space library 406 and an application 408.

In instances where the application receive buffer 132 is not in cache, the application 408 may be enabled to transmit a receive message to the user space library 406. The user space library 406 may register an application receive buffer 132 and transmit the application receive buffer 132 to the kernel 404. The kernel 404 may be enabled to pin and map the application receive buffer 132. The kernel 404 may transmit the buffer ID of the pinned and mapped application receive buffer 132 to the user space library 406. The user space library 406 may add a buffer virtual address to the received buffer lD and store the buffer lD in cache. The user space library 406 may post the newly pinned buffer ID on RQ to the hardware 402.

The hardware 402 may be enabled to process the incoming TCP packet, look-up the buffer lD for the buffer address, and place incoming TCP packet data directly in the corresponding pinned and mapped application receive buffer 132. The hardware 402 may be enabled to direct memory access (DMA) the payload for the incoming TCP packet to a RQ buffer. The hardware 402 or host processor 124 may be enabled to generate a completion queue entry (CQE) in the completion queue 137, which indicates reception of the TCP packet. The user space library 406 may be enabled to poll the completion queue (CQ) 137. When the user space library 406 completes polling the CQ 137, the user space library 406 may request the hardware 402 that subsequent completion may be followed by an event notification.

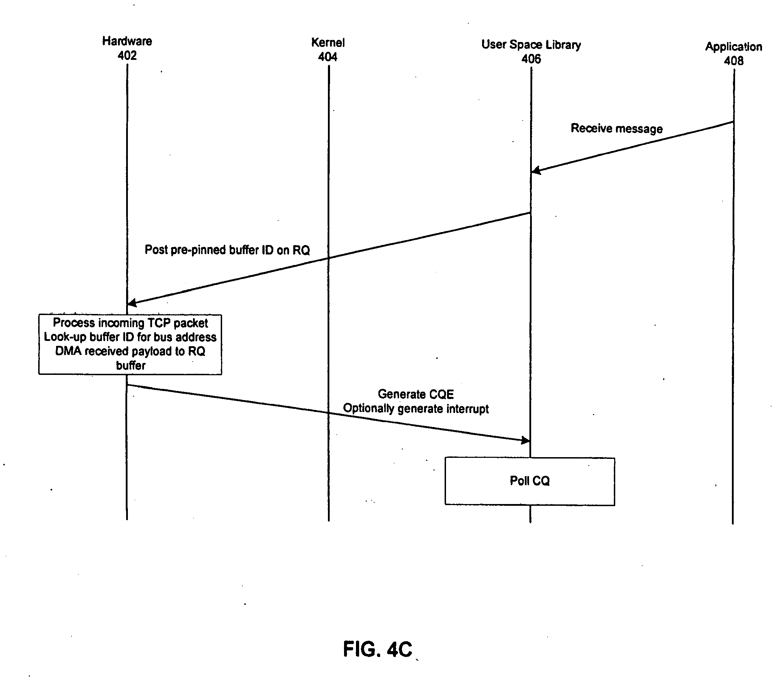

FIG. 4C is a flow diagram that illustrates exemplary receiving for user space TOE when the application buffer is in cache, in accordance with an embodiment of the invention. Referring to FIG. 4C, there is shown hardware 402, a kernel 404, a user space library 406 and an application 408.

When the application buffer is in cache, the application 408 may be enabled to transmit a receive message to the user space library 406. The user space library 406 may be enabled to post the pre-pinned buffer ID of the application receive buffer 132 on a receive queue (RQ) to the hardware 402. The hardware 402 may be enabled to process the incoming TCP packet, look-up the buffer ID for the buffer address and place incoming TCP packet data directly in the application receive buffer 132 corresponding to the pre-pinned buffer ID. The hardware 402 may be enabled to direct memory access (DMA) the payload for the incoming TCP packet to a RQ buffer. The hardware 402 may be enabled to generate a completion queue entry (CQE) in the completion queue 137 indicating reception of the TCP packet. The user space library 406 may be enabled to poll the completion queue (CQ) 137. When the user space library 406 completes polling the CQ 137, the user space library 406 may request the hardware 402 that subsequent completion may be followed by an event notification.

In accordance with an embodiment of the invention, a method and system for user space TCP offload may include a TCP offload engine (TOE) 114 for offloading transmission control protocol (TCP) processing of received data to an on-chip processor, for example, a NlC processor 130. The received data may be posted directly to hardware 402 or the host processor 124, thereby bypassing kernel 304 processing of the received data, utilizing a user space library 306. The hardware 402 may be enabled to determine if the received data is cached in memory 126. lf the received data is cached in the memory 126, then the received data may be posted directly to the hardware 402 or host processor 124, thereby bypassing kernel 304 processing of the received data.

If the received data is not cached in the memory 126, the user space library 306 may enable registration of at least one application receive buffer 132 comprising the received data. The kernel 304 may enable pinning of the application receive buffer 132 comprising the received data. The user space library 306 may enable posting of the pinned application receive buffer 132 comprising the received data to the hardware 402 or host processor 124. The user space library 306 may enable adding of an application buffer virtual address to a buffer ID of the application receive buffer 132 and storage of the application receive buffer 132 in cache memory 126. The user space library 306 may enable pre-posting of at least one application receive buffer 132 comprising the received data to the hardware 402 or host processor 124. The hardware 402 or host processor 124 may enable indication of receipt of the data by updating a completion queue entry in the completion queue 137. The hardware 402 or host processor 124 may enable generation of an event notification after updating the completion queue entry in the completion queue 137.

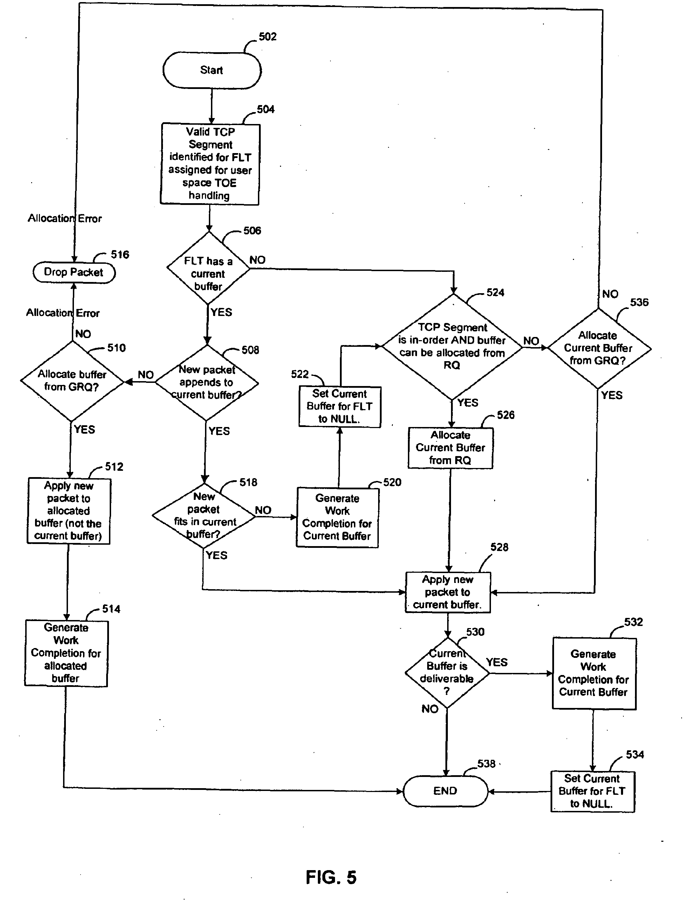

FIG. 5 is a flowchart illustrating exemplary steps for work request completion for transparent TCP offload with a user space library, in accordance with an embodiment of the invention. Referring to FIG. 5, exemplary steps may begin at step 502. In step 504, a valid TCP segment that is identified by a flow lookup table (FLT) may be assigned for user space TTO handling. In step 506, it may be determined whether the FLT has a current buffer. The coalescer 111 may utilize a flow lookup table (FLT) to maintain information regarding current network flows for which TCP segments are being collected for aggregation. If the FLT has a current buffer, control passes to step 508.

In step 508, it may be determined whether new TCP packets append to a current buffer. If the new TCP packets do not append to a current buffer, control passes to step 510. In step 510, it may be determined whether a buffer may be allocated from the GRQ. If the buffer from GRQ cannot be allocated, an allocation error may be indicated and control passes to step 516. In step 516, the packet may be dropped. If the buffer from GRQ can be allocated, control passes to step 512. In step 512, the new packet may be applied to the allocated buffer. In step 514, a work completion entry may be generated for the allocated buffer. Control then passes to end step 538.

In step 508, if the new TCP packets appends to a current buffer, control passes to step 518. In step 518, it may be determined whether the new packet fits in the current buffer. If the new packet fits in the current buffer, control passes to step 528. In step 528, the new packet may be applied to the current buffer. If the new packet does not fit in the current buffer, control passes to step 520. In step 520, a work completion entry may be generated for the current buffer. In step 522, the current buffer for the FLT may be set to NULL. ln step 524, it may be determined whether the TCP segment is in order and the buffer can be allocated from the RQ 224. lf the TCP segment is not in order or the buffer cannot be allocated from the RQ 224, control passes to step 536. In step 536, it may be determined whether the current buffer may be allocated from a GRQ. If the current buffer may not be allocated from a GRQ, an allocation error may be indicated and control passes to step 516. In step 516, the packet may be dropped. If the current buffer may be allocated from a GRQ, control passes to step 528. lf the TCP segment is in order and the buffer can be allocated from the RQ 224, control passes to step 526. In step 526, the current buffer may be allocated from the RQ 224.

In step 530, it may be determined whether the current buffer is deliverable. If the current buffer is deliverable, control passes to step 532. In step 532, a work completion entry may be generated for the current buffer. In step 534, the current buffer for FLT may be set to NULL. Control then passes to end step 538. If the current buffer is not deliverable, control passes to end step 538.

In accordance with an embodiment of the invention, a method and system for user space TCP offload may comprise a host processor 124 that enables offloading transmission control protocol (TCP) processing of received data to an on-chip processor, for example, a NIC processor 130. The received data may be posted directly to hardware, bypassing kernel processing of the received data, utilizing a user space library 220. If the received data is not cached in memory 126, at least one application buffer comprising the received data may be registered. The application buffer may be pinned and posted to hardware if the received data is not cached in memory 126. An application buffer virtual address may be added to a buffer lD of the application buffer and the application buffer may be stored in cache memory 126.

The received data may be posted directly to hardware bypassing kernel processing of the received data if the received data is cached in memory 126. At least one application buffer may be pre-posted to hardware. The receipt of data may be indicated by updating a completion queue entry in the hardware. An event notification may be generated after updating the completion queue entry in hardware.

**.** Another embodiment of the invention may provide a machine-readable storage, having stored thereon, a computer program having at least one code section executable by a machine, thereby causing the machine to perform the steps as described above for user space TCP offload engine.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for handling processing of network information, the method comprising:
offloading transmission control protocol (TCP) processing of received data to an on-chip processor;
posting a pre-pinned buffer ID of at least one application buffer on a receive queue directly to hardware by utilizing a user space library, said at least one application buffer comprising said received data; and
posting said received data directly to said hardware, bypassing kernel processing of said received data, utilizing said user space library.

2. The method according to claim 1, further comprising determining if said received data is cached in memory.

3. The method according to claim 2, further comprising registering said at least one application buffer comprising said received data if said received data is not cached in said memory.

4. The method according to claim 3, further comprising pinning said at least one application buffer comprising said received data if said received data is not cached in said memory.

5. The method according to claim 3, further comprising:
adding an application buffer virtual address to a buffer ID of said at least one application buffer; and
storing said at least one application buffer in cache memory.

6. A system for handling processing of network information, the system comprising:
circuitry (114) that enables offloading transmission control protocol (TCP) processing of received data to an on-chip processor (111, 130);
circuitry that enables posting a pre-pinned buffer ID of at least one application buffer on a receive queue directly to hardware (402) by utilizing a user space library (406), said at least one application buffer comprising said received data; and
circuitry that enables posting of said received data directly to said hardware, bypassing kernel processing of said received data, utilizing said user space library.

7. The system according to claim 6, further comprising circuitry that enables determining if said received data is cached in memory.

8. The system according to claim 7, further comprising circuitry that enables registration of said at least one application buffer comprising said received data if said received data is not cached in said memory.

9. The system according to claim 8, further comprising circuitry that enables pinning of said at least one application buffer comprising said received data if said received data is not cached in said memory.

## Patentansprüche

1. Verfahren zum Handhaben der Verarbeitung von Netzwerkinformationen, wobei das Verfahren umfasst:
Abladen (offload) der Transmission Control Protocol (Übertragungssteuerungsprotokoll) (TCP) -Verarbeitung empfangener Daten auf einen auf dem Chip ausgeführten Prozessor;
Absenden einer vorher festgelegten (pre-pinned) Puffer-ID wenigstens eines Anwendungspuffers auf einer Empfangs-Warteschlange direkt an Hardware mittels einer Benutzer-Bereich-Bibliothek, wobei der wenigstens eine Anwendungspuffer die empfangenen Daten enthält; und
Absenden der empfangenen Daten direkt an die Hardware mittels der Benutzer-Bereich-Bibliothek, unter Umgehung einer Kernel-Verarbeitung der empfangenen Daten.

2. Verfahren nach Anspruch 1, das des Weiteren das Ermitteln umfasst, ob die empfangenen Daten in einem Cachespeicher aufgenommen wurden.

3. Verfahren nach Anspruch 2, das des Weiteren das Registrieren des wenigstens einen Anwendungspuffers, der die empfangenen Daten enthält, umfasst, wenn die empfangenen Daten nicht in dem Cachespeicher aufgenommen wurden.

4. Verfahren nach Anspruch 3, das des Weiteren das Festlegen (pinning) des wenigstens einen Anwendungspuffers, der die empfangenen Daten enthält, umfasst, wenn die empfangenen Daten nicht in dem Cachespeicher aufgenommen wurden.

5. Verfahren nach Anspruch 3, das des Weiteren umfasst:
Hinzufügen einer virtuellen Anwendungspuffer-Adresse zu einer Puffer-ID des wenigstens einen Anwendungspuffers; und
Speichern des wenigstens einen Anwendungspuffers in einem Cachespeicher.

6. System zum Handhaben der Verarbeitung von Netzwerkinformationen, wobei das System aufweist:
eine Schaltung (114), die das Abladen der Transmission Control Protocol (Übertragungssteuerungsprotokoll) (TCP) -Verarbeitung empfangener Daten auf einen auf dem Chip ausgeführten Prozessor (111, 130) ermöglicht;
eine Schaltung, die das Absenden einer vorher festgelegten (pre-pinned) Puffer-ID wenigstens eines Anwendungspuffers auf einer Empfangs-Warteschlange direkt an Hardware (402) mittels einer Benutzer-Bereich-Bibliothek (406) ermöglicht, wobei der wenigstens eine Anwendungspuffer die empfangenen Daten enthält; und
eine Schaltung, die das Absenden der empfangenen Daten direkt an die Hardware mittels der Benutzer-Bereich-Bibliothek unter Umgehung einer Kernel-Verarbeitung der empfangenen Daten ermöglicht.

7. System nach Anspruch 6, das des Weiteren eine Schaltung aufweist, die das Ermitteln ermöglicht, ob die empfangenen Daten in einem Cachespeicher aufgenommen wurden.

8. System nach Anspruch 7, das des Weiteren eine Schaltung aufweist, die das Registrieren des wenigstens einen Anwendungspuffers, der die empfangenen Daten enthält, ermöglicht, wenn die empfangenen Daten nicht in dem Cachespeicher aufgenommen wurden.

9. System nach Anspruch 8, das des Weiteren eine Schaltung aufweist, die das Festlegen (pinning) des wenigstens einen Anwendungspuffers, der die empfangenen Daten enthält, ermöglicht, wenn die empfangenen Daten nicht in dem Cachespeicher aufgenommen wurden.

## Revendications

1. Procédé pour gérer le traitement d'informations de réseau, le procédé comprenant :
le transfert d'un traitement TCP (Transmission Control Protocol, protocole de contrôle de transmission) des données reçues à un processeur intégré sur une puce ;
l'envoi d'un identifiant (ID) de tampon pré-réservé d'au moins un tampon d'application dans une file d'attente de réception directement à des composants matériels en utilisant une bibliothèque d'espace utilisateur, ledit au moins un tampon d'application comprenant lesdites données reçues ; et
l'envoi desdites données reçues directement auxdits composants matériels, contournant un traitement central desdites données reçues, en utilisant ladite bibliothèque d'espace utilisateur.

2. Procédé selon la revendication 1, comprenant en outre la détermination de si lesdites données reçues sont en mémoire cache.

3. Procédé selon la revendication 2, comprenant en outre l'enregistrement dudit au moins un tampon d'application comprenant lesdites données reçues si lesdites données reçues ne sont pas dans ladite mémoire cache.

4. Procédé selon la revendication 3, comprenant en outre la réservation dudit au moins un tampon d'application comprenant lesdites données reçues si lesdites données reçues ne sont pas dans ladite mémoire cache.

5. Procédé selon la revendication 3, comprenant en outre :
l'ajout d'une adresse virtuelle de tampon d'application à un ID de tampon dudit au moins un tampon d'application ; et
le stockage dudit au moins un tampon d'application en mémoire cache.

6. Système pour gérer le traitement d'informations de réseau, le système comprenant :
des circuits (114) qui permettent de transférer un traitement TCP des données reçues à un processeur intégré sur une puce (111, 130) ;
des circuits qui permettent d'envoyer un identifiant (ID) de tampon pré-réservé d'au moins un tampon d'application dans une file d'attente de réception directement aux composants matériels (402) en utilisant une bibliothèque d'espace utilisateur (406), ledit au moins un tampon d'application comprenant lesdites données reçues ; et
des circuits qui permettent d'envoyer lesdites données reçues directement aux dits composants matériels, en contournant un traitement central desdites données reçues, en utilisant ladite bibliothèque d'espace utilisateur.

7. Système selon la revendication 6, comportant en outre des circuits qui permettent de déterminer si lesdites données reçues sont en mémoire cache.

8. Système selon la revendication 7, comportant en outre des circuits qui permettent un enregistrement dudit au moins un tampon d'application comprenant lesdites données reçues si lesdites données reçues ne sont pas dans ladite mémoire cache.

9. Système selon la revendication 8, comportant en outre des circuits qui permettent de réserver ledit au moins un tampon d'application comprenant lesdites données reçues si lesdites données reçues ne sont pas dans ladite mémoire cache.
